# EUROPÄISCHE PATENTSCHRIFT

(11) **EP 2 106 937 B1**
(45) Veröffentlichungstag und Bekanntmachung des Hinweises auf die Patenterteilung: **29.06.2011**
(21) Anmeldenummer: 09004772.1
(22) Anmeldetag: 31.03.2009
(51) Int. Cl.: B60G 17/033, B60G 17/052, B60G 17/056

(54) **Nutzfahrzeug mit einer Gasfederung, insbesondere Luftfederung und Gasfederungssystem**
Commercial vehicle with a gas suspension, in particular pneumatic suspension and gas suspension system
Véhicule utilitaire doté d'un ressort à gaz, notamment ressort pneumatique et système de ressort à gaz

(30) Priorität: 02.04.2008 DE 202008004545 U
(43) Veröffentlichungstag der Anmeldung: 07.10.2009
(73) Patentinhaber: Kögel Trailer GmbH & Co. KG, 86368 Gersthofen (DE)
(72) Erfinder: Schmutz-Eggert, Gerhard, 89278 Nersingen (DE); Falk, Robert, 89257 Illertissen (DE)
(74) Vertreter: Meissner, Bolte & Partner

(56) Entgegenhaltungen:
- DE-B4-102004 051 740
- FR-A- 2 255 194
- GB-A- 1 211 799
- US-A1- 2005 040 573

## Beschreibung

Die Erfindung betrifft ein Nutzfahrzeug mit einer Gasfederung, insbesondere Luftfederung, gemäß dem Oberbegriff des Anspruchs 1. Ferner betrifft die Erfindung ein Gasfederungssystem für ein Nutzfahrzeug. Ein Nutzfahrzeug der eingangs genannten Art ist aus der DE 10 2004 051 740 B4 bekannt.

Bei bestimmten Nutzfahrzeugen, beispielsweise Curtainsider-Aufliegern, wird eine maximale lichte Laderaumhöhe angestrebt. Dabei soll die gesetzlich vorgeschriebene, maximale Fahrzeughöhe im beladenen Zustand, wenn die Reifen des Nutzfahrzeugs einen geringeren Halbmesser als im unbeladenen Zustand aufweisen, nicht überschritten werden. Beim Entladen besteht jedoch das Problem, dass durch die Entlastung der Reifen die gesetzlich vorgeschriebene, maximale Fahrzeughöhe überschritten wird.

Bei Fahrzeugen mit einer Luftfederung ist es daher bekannt, ein Niveauregulierungsventil vorzusehen, das mit Hilfe einer Steuereinheit die Fahrhöhe des Nutzfahrzeugs korrigiert, so dass die gesetzliche Maximalhöhe unterschritten wird. Ein Verfahren zur Änderung des Fahrniveaus bei einem Nutzfahrzeug mit einem elektronisch gesteuerten Niveauregulierungsventil beschreibt beispielsweise die DE 10 2004 051 740 B4. Darin ist ein Steuerventil offenbart, das mit den Federbälgen einer Luftfederungsanlage verbunden ist. Das Steuerventil ist ferner mit einer Steuereinrichtung verbunden, die den Zeitpunkt des Öffnens und Schließens des Ventils reguliert. Dabei empfängt die Steuereinrichtung Daten, die Aufschluss über die aktuelle Fahrhöhe des Nutzfahrzeugs geben. Die Daten werden dabei von Sensoren erfasst, die das Ist-Niveau des Fahrzeugs anhand des Abstandes vom Fahrzeugsrahmen zur Fahrzeugachse, der Stoßdämpferhärte, der Achslasten oder der Druckbeaufschlagung der Federbälge ermitteln.

Die Herstellung eines Nutzfahrzeugs mit einem Steuerventil und der vorstehend beschriebenen Steuereinrichtung, ist verhältnismäßig aufwändig, da eine relativ umfangreiche Verkabelung notwendig ist. Ferner benötigen sowohl das Steuerventil, als auch die Steuereinrichtung eine Verbindung zum bordeigenen Stromnetz des Nutzfahrzeugs.

Der Erfindung liegt die Aufgabe zugrunde, ein Nutzfahrzeug mit einer Gasfederung, insbesondere Luftfederung, anzugeben, dessen Fahrhöhe in Abhängigkeit des Beladezustands einstellbar ist, wobei das Nutzfahrzeug, insbesondere die entsprechende Vorrichtung zur Fahrhöheneinstellung, einfach und kostengünstig herstellbar ist.

Diese Aufgabe wird erfindungsgemäß im Hinblick auf das Nutzfahrzeug durch den Gegenstand des Anspruchs 1 und im Hinblick auf das Gasfederungssystem durch den Gegenstand des Anspruchs 10 gelöst.

Die Erfindung beruht auf dem Gedanken, ein Nutzfahrzeug mit einer Gasfederung, insbesondere Luftfederung, anzugeben, die ein oder mehrere zwischen einer Achse und einem Fahrzeugrahmen angeordnete Federbälge umfasst, wobei die Federbälge mit wenigstens einem Niveauregulierungsventil gekoppelt sind derart, dass die Fahrhöhe des Nutzfahrzeugs veränderbar ist. Dabei weist das Niveauregulierungsventil einen Steuerdruckeingang auf, der direkt mit wenigstens einem Federbalg verbunden ist derart, dass die Fahrhöhe des Nutzfahrzeugs in Abhängigkeit vom Druck innerhalb wenigstens eines Federbalgs veränderbar ist.

Durch die direkte Kopplung des Steuerdruckeingangs mit wenigstens einem Federbalg wird ermöglicht, dass der Druck innerhalb des Federbalgs direkt zur Steuerung der Fahrhöhe verwendet werden kann. Eine aufwändige, elektronische Umsetzung bzw. Regelung ist nicht notwendig. Damit entfällt ebenfalls eine relativ umfangreiche Verkabelung, da das erfindungsgemäße Niveauregulierungsventil rein mechanisch betätigbar ist und für den Betrieb keine elektrische Energieversorgung benötigt. Das erfindungsgemäße Nutzfahrzeug, insbesondere die Gasfederung des erfindungsgemäßen Nutzfahrzeugs, weist im Allgemeinen einen relativ einfachen Aufbau auf, so dass eine einfache, schnelle und kostengünstige Herstellung und Montage gewährleistet ist.

Bei einer bevorzugten Ausführungsform des erfindungsgemäßen Nutzfahrzeugs ist das Niveauregulierungsventil mit einer Gasversorgung gekoppelt derart, dass die Zufuhr eines Versorgungsdrucks zu wenigstens einem Federbalg in direkter Abhängigkeit eines Steuerdrucks steuerbar ist, wobei der Steuerdruck dem Druck innerhalb des Federbalgs entspricht. Vorteilhafterweise ist das Niveauregulierungsventil zwischen eine Gasversorgung, beispielsweise einem Drucklufttank, und wenigstens einen Federbalg der Gasfederung geschaltet. Der Druck im Federbalg dient dabei als Steuerdruck, in dessen Abhängigkeit das Niveauregulierungsventil betätigbar ist. Je nach Höhe des Steuerdrucks öffnet bzw. sperrt das Niveauregulierungsventil die Verbindung zwischen der Gasversorgung und dem Federbalg. Ferner ist es möglich, dass das Niveauregulierungsventil den wenigstens einen Federbalg mit der Umgebung verbindet, so dass beim Öffnen des Niveauregulierungsventils Gas, insbesondere Luft, aus dem Federbalg entweicht.

Das Niveauregulierungsventil ist vorzugsweise mit einem Steuerdruck von höchstens drei bar, insbesondere höchstens 2,5 bar, insbesondere höchstens 2 bar, insbesondere höchstens 1,5 bar, betätigbar. Durch diesen relativ geringen Steuerdruck ist gewährleistet, dass das Niveauregulierungsventil direkt durch den Druck innerhalb des Federbalgs gesteuert wird. Eine Anpassung des an das Niveauregulierungsventil geleiteten Federbalgdrucks zur Verwendung als Steuerdruck, beispielsweise durch eine Vorrichtung zur Druckerhöhung, ist nicht notwendig.

Das Niveauregulierungsventil kann zur Betätigung mit unterschiedlichen Schaltdrücken einstellbar sein. Als Schaltdruck wird der Steuerdruckwert beschrieben, der die Betätigung bzw. Auslösung des Niveauregulierungsventils bewirkt, d.h. bei dem das Ventil öffnet bzw. schließt. Auf diese Weise ist es möglich, das Niveauregulierungsventil bei der Montage in einem Nutzfahrzeug an das Nutzfahrzeug, insbesondere an das Leergewicht des Nutzfahrzeugs, anzupassen. Das Niveauregulierungsventil kann somit universell in verschiedene Nutzfahrzeugtypen eingebaut werden. Bei der Montage wird das Ventil an die Eigenschaften des jeweiligen Fahrzeugtyps angepasst und eingestellt, so dass der Schaltdruck dem Steuerdruck entspricht, bei dem das Nutzfahrzeug die gesetzlich vorgeschriebene Fahrhöhe aufweist. Beispielsweise kann das Niveauregulierungsventil zur Verwendung in Sattelaufliegern, Pritschenfahrzeugen, Kipperfahrzeugen oder Curtainsider-Aufliegern eingesetzt werden.

Die Erfindung ist nicht darauf beschränkt, dass das Niveauregulierungsventil angepasst ist, die gesetzlich vorgeschriebene Maximalhöhe eines Nutzfahrzeugs einzuhalten. Vielmehr kann eine beliebige Fahrhöhe festgelegt werden, die mit Hilfe des Ventils eingehalten wird. Die Einstellung des Ventils auf die gesetzlich vorgeschriebene Maximalhöhe ist jedoch bevorzugt, um eine maximale Ladehöhe im Innenraum des Nutzfahrzeugs bereitzustellen.

Bei einer bevorzugten Ausführungsform des erfindungsgemäßen Nutzfahrzeugs ist das Niveauregulierungsventil derart angepasst, dass die Fahrhöhe um höchstens 35 mm, insbesondere höchstens 30 mm, insbesondere höchstens 25 mm, insbesondere höchstens 20 mm, veränderbar ist. Üblicherweise bewirkt die Beladung eines Nutzfahrzeugs eine Verformung der Reifen, so dass der statische Halbmesser der Reifen bei zunehmender Beladung reduziert wird. Beim Entladen nehmen die Reifen wieder ihre ursprüngliche Form ein. Insgesamt führt die Änderung des statischen Halbmessers der Reifen zu einer Änderung der Fahrhöhe des Nutzfahrzeugs um bis zu 25 mm bis 35 mm. Das Niveauregulierungsventil ist daher angepasst, die Fahrhöhenänderung auszugleichen bzw. zu kompensieren. Dadurch, dass das Niveauregulierungsventil gerade die Höhenänderung zwischen beladenem und unbeladenem Zustand des Nutzfahrzeugs ausgleicht, wird die Effizienz und Lebensdauer des Ventils erhöht.

Vorzugsweise sind mehrere Federbälge mit einem gemeinsamen Niveauregulierungsventil verbunden. Dadurch ist eine Steuerung der Fahrhöhe gleichmäßig möglich, da der Druck innerhalb der Federbälge gleichzeitig verändert wird. Ferner ist der Aufbau der Gasfederung mit einer geringen Anzahl von Niveauregulierungsventilen einfach und kostengünstig.

Das Niveauregulierungsventil kann ein mechanisches Wegeventil umfassen. Ein derartiges Ventil weist einen besonders einfachen Aufbau und eine hohe Zuverlässigkeit auf.

Vorzugsweise weist das Wegeventil wenigstens zwei, insbesondere drei, Schaltstellungen zur Einstellung von wenigstens zwei, insbesondere drei, Fahrhöhen auf.

Bei einer weiteren bevorzugten Ausführungsform ist das Niveauregulierungsventil derart angepasst, dass die Fahrhöhe des Nutzfahrzeugs zusätzlich fremdbetätigt einstellbar ist. Auf diese Weise kann die Fahrhöhe beispielsweise durch einen Anwender, insbesondere den Fahrer des Nutzfahrzeugs, auf ein gewünschtes Niveau eingestellt werden. Beispielsweise kann die Fahrhöhe des Nutzfahrzeugs verändert werden, um die Höhe des Nutzfahrzeugs, insbesondere des Ladebodens, an eine Laderampe anzupassen.

Die Erfindung beruht ferner auf dem Gedanken, ein Gasfederungssystem, insbesondere Luftfederungssystem, für ein Nutzfahrzeug mit einem oder mehreren zwischen einer Achse und einem Fahrzeugrahmen angeordneten Federbälgen anzugeben, die mit wenigstens einem Niveauregulierungsventil gekoppelt sind derart, dass die Fahrhöhe des Nutzfahrzeugs veränderbar ist, wobei das Niveauregulierungsventil einen Steuerdruckeingang aufweist, der direkt mit wenigstens einem Federbalg verbunden ist derart, dass die Fahrhöhe des Nutzfahrzeugs in Abhängigkeit vom Druck innerhalb wenigstens eines Federbalgs veränderbar ist.

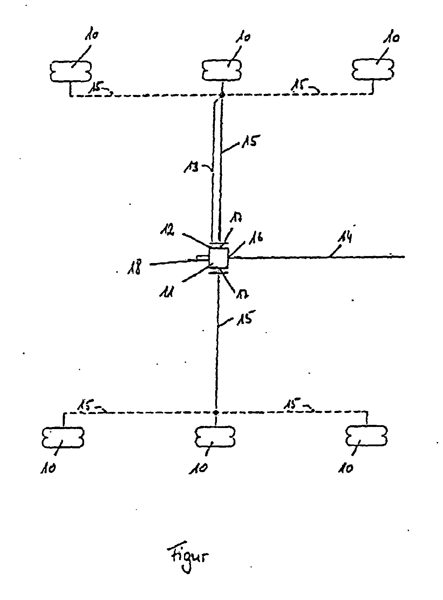

Die Erfindung wird im Folgenden anhand von Ausführungsbeispielen unter Bezug auf die beigefügte schematische Zeichnung näher erläutert. Darin zeigt die einzige Figur ein Schaltbild einer Gasfederung für ein erfindungsgemäßes Nutzfahrzeug.

Die einzige Figur zeigt ein Niveauregulierungsventil 11, das in einer Luftfederungsanlage eines Nutzfahrzeugs zum Einsatz kommt. Die Erfindung ist nicht auf Luftfederungen beschränkt, sondern bezieht sich generell auf Federungsanlagen, die ein Gas als Federungsmittel umfassen. Das Ventil 11 weist einen Drucklufteingang 16 auf, der mit einer Versorgungsleitung 14 verbunden ist. Die Versorgungsleitung 14 verbindet das Ventil 11 mit einer Gas- bzw. Luftversorgung (nicht dargestellt), beispielsweise einem Drucklufttank oder einem Kompressor. Ferner weist das Ventil 11 zwei Druckluftausgänge 17 auf, die jeweils mit einer Druckleitung 15 verbunden sind. Die Druckleitung 15 verbindet das Ventil 11 mit Federbälgen 10, wobei gemäß dem hier beschriebenen Ausführungsbeispiel sechs Federbälge 10 dargestellt sind. Grundsätzlich ist jede andere Anzahl von Federbälgen 10 möglich, wobei ebenfalls die Anzahl der Druckluftausgänge 17 des Ventils 11 variieren kann. Wie in der Figur zu erkennen ist, sind jeweils drei Federbälge 10 über die Druckleitung 15 mit einem Druckluftausgang 17 verbunden. Das Ventil 11 weist ferner einen Steuerdruckeingang 12 auf, der mit einer Steuerdruckleitung 13 verbunden ist. Das andere Ende der Steuerdruckleitung 13 ist mit einer Druckleitung 15 gekoppelt. Es ist auch möglich, dass die Steuerdruckleitung 13 direkt mit einem oder mehreren Federbälgen 10 verbunden ist. Auf diese Weise wird erreicht, dass der in den Federbälgen 10 vorhandene Druck gleichzeitig als Steuerdruck über die Steuerdruckleitung 13 an das Ventil 11 geleitet wird. Des Weiteren umfasst das Niveauregulierungsventil 11 einen Druckauslass 18, der zur Umgebung hin offen ist, so dass bei entsprechender Stellung des Ventils 11 Druck aus dem System, insbesondere aus den Federbälgen 10 entweichen kann. Dementsprechend können also die Druckleitungen 15 durch entsprechende Stellung des Ventils 11 entweder mit der Versorgungsleitung 14 oder mit dem Druckauslass 18 verbunden werden. Dabei bewirkt eine Verbindung der Druckleitungen 15 mit der Versorgungsleitung 14 eine Druckerhöhung in den Federbälgen 10, während hingegen eine Verbindung der Druckleitung 15 mit dem Druckauslass 18 zu einer Druckminderung in den Federbälgen 10 führt.

Aufgrund des höheren Gewichts des Nutzfahrzeugs im beladenen Zustand sind die Reifen des Nutzfahrzeugs verformt, wodurch die Fahrhöhe des Nutzfahrzeugs reduziert ist. Üblicherweise wird die gesetzlich vorgeschriebene Maximalhöhe des Nutzfahrzeugs dadurch gerade erreicht. Der Druck in den Federbälgen 10 ist dabei relativ hoch. Nach dem Entladen des Nutzfahrzeugs ist die Fahrhöhe erhöht, da die Reifen ihre ursprüngliche Form annehmen. Dabei sinkt der Druck innerhalb der Federbälge 10. Um die maximal vorgeschriebene Fahrhöhe nicht zu überschreiten, bewirkt das Niveauregulierungsventil 11 eine Verbindung der Druckleitung 15 mit dem Druckauslass 18, so dass der Druck in den Federbälgen 10 weiter reduziert wird. Der Druck in den Federbälgen 10 korreliert mit der Fahrhöhe, d.h. dass jedem Wert des Federbalgdrucks eine Fahrhöhe zugeordnet ist. Sobald der Druck im Federbalg 10 erreicht wird, der der gesetzlich vorgeschriebenen Fahrzeughöhe entspricht, schließt bzw. sperrt das Ventil 11 die Verbindung zwischen Druckleitung 15 und Druckauslass 18, so dass der Federbalgdruck und die Fahrhöhe gehalten werden.

Die Steuerung des Niveauregulierungsventils 11 erfolgt rein mechanisch, so dass keine zusätzlichen elektronischen oder pneumatischen Bauteile zwischengeschaltet werden müssen. Dies wird durch das Niveauregulierungsventil 11 erreicht, das mit einem relativ geringen Steuerdruck betätigbar ist. Vorzugsweise weist das Niveauregulierungsventil 11 einen Schaltdruck von weniger als 2 bar auf. Auf diese Weise ist es möglich, den Druck innerhalb des Federbalgs 10 als Steuerdruck zu verwenden.

Vorzugsweise kommt zum Ändern der Fahrhöhe eines Nutzfahrzeugs mit einer Gasfederung, insbesondere Luftfederung, die einen oder mehrere zwischen einer Achse und einem Fahrzeugrahmen angeordnete Federbälge 10 umfasst, die mit wenigstens einem Steuerdruckeingang 12 eines Niveauregulierungsventil 11 direkt gekoppelt sind, ein Verfahren zum Einsatz, bei dem das Niveauregulierungsventil 11 abhängig vom Beladezustand des Nutzfahrzeugs unterhalb eines bestimmten Federbalgdrucks öffnet, so dass der Federbalgdruck reduziert wird, wodurch auch die Fahrhöhe verringert wird.

Ferner kann das Niveauregulierungsventil 11 bei Erreichen des bestimmten Federbalgdrucks schließen, so dass der bestimmte Federbalgdruck gehalten wird, wodurch auch die Fahrhöhe konstant bleibt.

### Bezugszeichenliste

- 10: Federbalg
- 11: Niveauregulierungsventil
- 12: Steuerdruckeingang
- 13: Steuerdruckleitung
- 14: Versorgungsleitung
- 15: Druckleitung
- 16: Drucklufteingang
- 17: Druckluftausgang
- 18: Druckauslass

## Patentansprüche

1. Nutzfahrzeug mit einer Gasfederung, insbesondere Luftfederung, die einen oder mehrere zwischen einer Achse und einem Fahrzeugrahmen angeordnete Federbälge (10) umfasst, wobei die Federbälge (10) mit wenigstens einem Niveauregulierungsventil (11) gekoppelt sind derart, dass die Fahrhöhe des Nutzfahrzeugs veränderbar ist,
**dadurch gekennzeichnet,dass**
das Niveauregulierungsventil (11) einen Steuerdruckeingang (12) aufweist, der direkt mit wenigstens einem Federbalg (10) verbunden ist derart, dass die Fahrhöhe des Nutzfahrzeugs in Abhängigkeit vom Druck innerhalb wenigstens eines Federbalgs (10) veränderbar ist.

2. Nutzfahrzeug nach Anspruch 1,
**dadurch gekennzeichnet,dass**
das Niveauregulierungsventil (11) mit einer Gasversorgung gekoppelt ist derart, dass die Zufuhr eines Versorgungsdrucks zu wenigstens einem Federbalg (10) in direkter Abhängigkeit eines Steuerdrucks steuerbar ist, wobei der Steuerdruck dem Druck innerhalb des Federbalgs (10) entspricht.

3. Nutzfahrzeug nach Anspruch 1 oder 2,
**dadurch gekennzeichnet,dass**
das Niveauregulierungsventil (11) mit einem Steuerdruck von höchstens 3 bar, insbesondere höchstens 2,5 bar, insbesondere höchstens 2 bar, insbesondere höchstens 1,5 bar, betätigbar ist.

4. Nutzfahrzeug nach wenigstens einem der Ansprüche 1 bis 3,
**dadurch gekennzeichnet,dass**
das Niveauregulierungsventil (11) zur Betätigung mit unterschiedlichen Schaltdrücken einstellbar ist.

5. Nutzfahrzeug nach wenigstens einem der Ansprüche 1 bis 4,
**dadurch gekennzeichnet,dass**
das Niveauregulierungsventil (11) angepasst ist derart, dass die Fahrhöhe um höchstens 35 mm, insbesondere höchstens 30 mm, insbesondere höchstens 25 mm, insbesondere höchstens 20 mm, veränderbar ist.

6. Nutzfahrzeug nach wenigstens einem der Ansprüche 1 bis 5,
**dadurch gekennzeichnet,dass**
mehrere Federbälge (10) mit einem gemeinsamen Niveauregulierungsventil (11) verbunden sind.

7. Nutzfahrzeug nach wenigstens einem der Ansprüche 1 bis 6,
**dadurch gekennzeichnet,dass**
das Niveauregulierungsventil (11) ein mechanisches Wegeventil umfasst.

8. Nutzfahrzeug nach Anspruch 7,
**dadurch gekennzeichnet,dass**
das Wegeventil wenigstens zwei, insbesondere drei, Schaltstellungen zur Einstellung von wenigstens zwei, insbesondere drei, Fahrhöhen aufweist.

9. Nutzfahrzeug nach wenigstens einem der Ansprüche 1 bis 8,
**dadurch gekennzeichnet, dass**
das Niveauregulierungsventil (11) angepasst ist derart, dass die Fahrhöhe des Nutzfahrzeugs zusätzlich fremdbetätigt einstellbar ist.

10. Gasfederungssystem, insbesondere Luftfederungssystem, für ein Nutzfahrzeug mit einem oder mehreren zwischen einer Achse und einem Fahrzeugrahmen angeordneten Federbälgen (10), die mit wenigstens einem Niveauregulierungsventil (11) gekoppelt sind derart, dass die Fahrhöhe des Nutzfahrzeugs veränderbar ist,
**dadurch gekennzeichnet, dass**
das Niveauregulierungsventil (11) einen Steuerdruckeingang (12) aufweist, der direkt mit wenigstens einem Federbalg (10) verbunden ist derart, dass die Fahrhöhe des Nutzfahrzeugs in Abhängigkeit vom Druck innerhalb wenigstens eines Federbalgs (10) veränderbar ist.

## Claims

1. Commercial vehicle having a gas suspension, especially air suspension, which comprises one or more spring bellows (10) arranged between an axle and a vehicle frame, the spring bellows (10) being coupled to at least one level-regulating valve (11) in such a way that the ride height of the commercial vehicle can be altered,
**characterized in that**
the level-regulating valve (11) has a control pressure input (12) which is directly connected to at least one spring bellows (10) in such a way that the ride height of the commercial vehicle can be altered in dependence upon the pressure inside at least one spring bellows (10).

2. Commercial vehicle according to claim 1,
**characterized in that**
the level-regulating valve (11) is coupled to a gas supply in such a way that the application of a supply pressure to at least one spring bellows (10) is controllable in direct dependence upon a control pressure, the control pressure corresponding to the pressure inside the spring bellows (10).

3. Commercial vehicle according to claim 1 or 2,
**characterized in that**
the level-regulating valve (11) is arranged to be actuated at a control pressure of at most 3 bar, especially at most 2.5 bar, especially at most 2 bar, especially at most 1.5 bar.

4. Commercial vehicle according to at least one of claims 1 to 3,
**characterized in that**
the level-regulating valve (11) is settable for actuation at different switching pressures.

5. Commercial vehicle according to at least one of claims 1 to 4,
**characterized in that**
the level-regulating valve (11) is arranged in such a way that the ride height can be altered by at most 35 mm, especially at most 30 mm, especially at most 25 mm, especially at most 20 mm.

6. Commercial vehicle according to at least one of claims 1 to 5,
**characterized in that**
a plurality of spring bellows (10) are connected to a common level-regulating valve (11).

7. Commercial vehicle according to at least one of claims 1 to 6,
**characterized in that**
the level-regulating valve (11) comprises a mechanical directional control valve.

8. Commercial vehicle according to claim 7,
**characterized in that**
the directional control valve has at least two, especially three, switching positions for setting at least two, especially three, ride heights.

9. Commercial vehicle according to at least one of claims 1 to 8,
**characterized in that**
the level-regulating valve (11) is arranged in such a way that the ride height of the commercial vehicle is additionally settable by extraneous actuation.

10. Gas suspension system, especially air suspension system, for a commercial vehicle, having one or more spring bellows (10) arranged between an axle and a vehicle frame, which spring bellows (10) are coupled to at least one level-regulating valve (11) in such a way that the ride height of the commercial vehicle can be altered,
**characterized in that**
the level-regulating valve (11) has a control pressure input (12) which is directly connected to at least one spring bellows (10) in such a way that the ride height of the commercial vehicle can be altered in dependence upon the pressure inside at least one spring bellows (10).

## Revendications

1. Véhicule utilitaire avec une suspension à gaz, en particulier une suspension pneumatique, qui comprend un ou plusieurs soufflets (10) disposé(s) entre un essieu et un châssis de véhicule, dans lequel les soufflets (10) sont couplés à au moins une soupape de régulation du niveau (11) de sorte que la hauteur de conduite du véhicule utilitaire soit modifiable,
**caractérisé en ce que**
la soupape de régulation du niveau (11) présente une arrivée de pression de pilotage (12) qui est reliée directement à au moins un soufflet (10) de sorte que la hauteur de conduite du véhicule utilitaire puisse être modifiée en fonction de la pression à l'intérieur d'au moins un soufflet (10).

2. Véhicule utilitaire selon la revendication 1,
**caractérisé en ce que**
la soupape de régulation du niveau (11) est couplée à une alimentation en gaz de sorte que l'arrivée d'une pression d'alimentation vers au moins un soufflet (10) puisse être pilotée en fonction directe d'une pression de pilotage, la pression de pilotage correspondant à la pression à l'intérieur du soufflet (10).

3. Véhicule utilitaire selon la revendication 1 ou 2,
**caractérisé en ce que**
la soupape de régulation du niveau (11) peut être actionnée avec une pression de pilotage de 3 bars au maximum, en particulier de 2,5 bars au maximum, en particulier de 2 bars au maximum, en particulier de 1,5 bar au maximum.

4. Véhicule utilitaire selon au moins l'une quelconque des revendications 1 à 3,
**caractérisé en ce que**
la soupape de régulation du niveau (11) est réglable pour un actionnement avec différentes pressions de commutation.

5. Véhicule utilitaire selon au moins l'une quelconque des revendications 1 à 4,
**caractérisé en ce que**
la soupape de régulation du niveau (11) est adaptée de sorte que la hauteur de conduite puisse être modifiée de 35 mm au maximum, en particulier de 30 mm au maximum, en particulier de 25 mm au maximum, en particulier de 20 mm au maximum.

6. Véhicule utilitaire selon au moins l'une quelconque des revendications 1 à 5,
**caractérisé en ce que**
plusieurs soufflets (10) sont reliés à une soupape de régulation du niveau commune (11).

7. Véhicule utilitaire selon au moins l'une quelconque des revendications 1 à 6,
**caractérisé en ce que**
la soupape de régulation du niveau (11) comprend un distributeur mécanique.

8. Véhicule utilitaire selon la revendication 7,
**caractérisé en ce que**
le distributeur présente au moins deux, en particulier trois, positions de commutation pour le réglage d'au moins deux, en particulier trois, hauteurs de conduite.

9. Véhicule utilitaire selon au moins l'une quelconque des revendications 1 à 8,
**caractérisé en ce que**
la soupape de régulation du niveau (11) est adaptée de sorte que la hauteur de conduite du véhicule utilitaire soit également réglable par une manipulation extérieure.

10. Système de suspension à gaz, en particulier système de suspension pneumatique, pour un véhicule utilitaire avec un ou plusieurs soufflets (10) disposés entre un essieu et un châssis de véhicule, qui sont couplés à au moins une soupape de régulation du niveau (11) de sorte que la hauteur de conduite du véhicule utilitaire soit modifiable,
**caractérisé en ce que**
la soupape de régulation du niveau (11) présente une arrivée de pression de pilotage (12) qui est reliée directement à au moins un soufflet (10) de sorte que la hauteur de conduite du véhicule utilitaire puisse être modifiée en fonction de la pression à l'intérieur d'au moins un soufflet (10).
